# EUROPEAN PATENT SPECIFICATION

(11) **EP 1 448 043 B1**
(45) Date of publication and mention of the grant of the patent: **20.12.2006**
(21) Application number: 02785090.8
(22) Date of filing: 31.10.2002
(51) Int. Cl.: A01B 29/06

(54) **SOIL COMPACTER SUITED FOR CONNECTION OF A TOOL**
ZUM ANSCHLUSS EINES WERKZEUGS GEEIGNETER BODENVERDICHTER
DISPOSITIF DE COMPACTAGE DU SOL CONCU POUR LE RACCORDEMENT A UN OUTIL

(30) Priority: 31.10.2001 DK 200101610
(43) Date of publication of application: 25.08.2004
(73) Proprietor: KAASTRUP, Soren, DK-7870 Roslev (DK)
(72) Inventor: KAASTRUP, Soren, DK-7870 Roslev (DK)
(74) Representative: Nielsen, Leif
(86) International application number: PCT/DK2002/000721
(87) International publication number: WO 2003/037063

(56) References cited:
- DK-B- 162 801
- GB-A- 2 192 773
- US-A- 4 479 549

## Description

The present invention concerns a soil compacter suited for connecting a tool and of the kind indicated in the preamble of claim 1.

When cultivating areas of soil, the farmers want a certain texture of the soil, where the uppermost part of the soil is worked at a depth of about five centimetres, whereas the soil layers under the worked soil layer are to be firm. This has appeared to provide the best seedbed for the crops chosen and the greatest yield afterwards.

The common procedure by cultivating a field is as follows:
a) the soil is ploughed at a depth up to 25 cm,
b) the soil is compacted by a soil compacter or a roller,
c) the soil is harrowed for sowing,
d) a chosen crop is sown, and
e) the soil is compacted around the seeds with a soil compacter or roller.

The disadvantage of this procedure for cultivating a field is that the farmer is to drive over the field at least once for each of the above soil preparation types which is expensive and time-consuming.

As a solution to this, agricultural machine producers make combination machines where two or more of the above soil preparation types are performed in one and the same round over the field. For example, there is produced a harrowing/sowing/rolling machine where the above soil preparation type c-e is made in one round.

The ideal would be to perform all five soil preparation types at once, but this will require a large and long combination machine requiring a very large and strong tractor, which will make the solution disproportionately expensive and unprofitable for most average farms.

With soil compacters it is important to achieve a uniformly high pressure on the soil in order to ensure an efficient compacting. Front-mounted soil compacters are known which are often provided with weights for achieving sufficient pressure. This causes heavy steering and loads the steering gear and bearings and so on. Alternatively, a front-mounted soil compacter may be connected with a tractor via a hydraulic cylinder that presses the soil compacter against the ground. This construction causes the front wheel, which are often driving wheels, to be lifted off, whereby steering and traction power are impaired. Thus there is a limit to the weight with which one may load the front-mounted soil compacters.

There is also known a type of combination machines combining the above soil preparation type b-e, where the twin wheels of the tractor in combination with a narrow, towed soil compacter driving between the wheel tracks and functioning as first member of the combination machine, and where in connection with the narrow soil compacter there is provided a harrowing, sowing and rolling tool. The soil compacter acts as a front support roller in a towed combination tool which is connected to a tractor via a drawbar. A part of the weight of the combination tool is thus resting on this roller. By limited tool weight, insufficient soil compacting occurs. Furthermore, nonuniform compacting at wheels and at compacting roller may occur. This causes changing quality of the seedbed.

Furthermore, this kind of combination machines are disadvantageous in that they, due to their length, are difficult to manoeuvre on fields with e.g. many corners and uneven geometries, and that the combination machine is to be disassembled during transport from one location to another.

In the patent application GB 2 201 072, there is described a towing arrangement for a tractor enabling towing of two or more soil preparation tools simultaneously across the field. The towing arrangement, including another tool, may either be connected to a first tool which is coupled to a tractor, or may be directly connected to a tractor. This towing arrangement is, however, disadvantageous, as the position of the other connected tool cannot be changed, which is important for achieving the desired soil compacting pressure.

The purpose of the invention is to indicate a soil compacter to which a tool may be connected, which can utilise the soil compacter as a supporting wheel and which enables transferring large weight on the soil compacter in order to form a uniform seedbed. Furthermore, it is desirable to indicate a soil compacter which is designed so that the combination machine becomes shorter and easier to manoeuvre.

This is achieved with a soil compacter of the type described in the introduction which is peculiar as described in the characterising part of claim 1.

In the following, the term actuator is used for a unit clamped between machine parts, and where the length may be adjusted either manually or mechanically. Furthermore, the term tractor is used as an example of a towing machine.

In order to achieve uniform compacting of the soil and a high degree of compacting, the soil compacter is designed so that the weight of some of the connected tool and the weight of a part of the rearmost part of the tractor are transferred to the roller of the soil compacter according to the principle of the lever, which has point of rotation above the roller of the soil compacter.

In order to achieve a transfer of a downwards directed force to the roller of the soil compacter from the weight of the connected tool and the rearmost part of the tractor, it is necessary that the soil compacter is connected to the tractor in such a way that the connection between tractor and soil compacter allows transmission of force so that the downwards going force on the connection caused by the moment about the point of rotation of the soil compacter from the weight of the connected tool, is counteracted by an upwards going force on the connection caused by the moment about the point of rotation of the soil compacter from the weight of the rearmost part of the tractor. A balance between the mutually opposite forces on the connection between tractor and soil compacter will appear and thereby cause a downward directed force on the roller of the soil compacter.

A connection between tractor and soil compacter allowing force transfer may e.g. be a forked connection, where the fork is either preferably mounted on the drawbar of a towing machine so that the fork, when connecting the soil compacter, encloses the drawbar of the soil compacter, or that the fork alternatively is mounted on the drawbar of the soil compacter so that the fork by connecting the soil compacter encloses the drawbar of the tractor, or alternatively, where a fork is mounted on both the drawbar of the tractor and on the drawbar of the soil compacter.

The upward directed force on the connection between tractor and soil compacter caused by the moment from the weight of the connected tool will provide lifting of the rearmost part of the tractor, which is not possible. However, it will contribute to reducing the wheel pressure on the rearmost set of wheels, which implies that the front set of wheels maintains contact with the ground, whereby good steering and towing force is maintained without using front weights, which is particularly advantageous by four-wheel drive tractors.

The downward-going force on the roller of the soil compacter will furthermore reduce the significance of the pressure from the rear set of wheels of the tractor with regard to the quality of the soil compacting, as the roller will compact the soil along its entire width with a pressure being greater than or equal to the pressure from the rear wheels of the tractor, whereby is achieved a far more uniform soil compacting and a better seedbed.

In order to be able to change the position of the connected tool, the frame is designed so that it is composed of two parts. An upper part connected with the drawbar and a lower part connected with the axle for one or more juxtaposed rollers. The two parts of the frame are pivotably connected with a pivoting hinge. Between the upper part and the lower part is mounted at least one frame actuator. By actuating at least one frame actuator, both the distance between the ground and the connected tool as well as the distance between the centre of gravity of the connected tool and the roller are changed, resulting in change of the moment caused by the weight of the connected tool, whereby the roller pressure is changed.

Alternatively, the soil compacter may be shaped so that the upper and lower parts of the frame are interconnected with a hinge arrangement, which is placed in connection with the drawbar and in front of the roller as seen in the working direction of the soil compacter. Between the upper part and the lower part there is mounted at least one frame actuator.

In order to connect a tool, on the upper part of the frame of the soil compacter there is mounted a fastening arrangement, preferably a three-point suspension, which is fitted with a hinge arrangement, preferably a pivoting hinge. Between the fastening arrangement and the upper part of the frame there is mounted a connecting actuator for adjusting the angle of the connected tool with the frame holding the fastening arrangement at an angle, and which simultaneously holds the tool disposed preferably in parallel with the surface of the ground.

Alternatively, the fastening arrangement may be mounted on the connected tool and designed sot that the connection between the connected tool and the soil compacter is effected via a hinge and e.g. a top rod.

In order to adjust the actuators, the soil compacter includes a control mechanism for controlling the frame actuator and the connecting actuator, where the control mechanism is configured for adjusting the connecting actuator in relation to the frame actuator so that a change of the frame actuator implies adjusting of the connecting actuator for maintaining the parallel position of the tool in relation to the ground surface.

In order to achieve uniform compacting of the ground, the rollers consist of a material including at least one of the group consisting of rubber tyres filled with heavy material, metal rings, or very hard plastic.

In order to change the height of the connected tool, actuators are used including at least one from the group consisting of hydraulic cylinders, pneumatic cylinders or screw rod (top rods).

Alternatively, the soil compacter may be thus designed so that it is only necessary to use one actuator for setting the connected tool. This is achieved by designing the soil compacter as described in claim 8, where the fastening arrangement for mounting a tool is fitted at the upper part of the frame with a second hinge arrangement, and that between the fastening arrangement and the upper part of the frame there is mounted a fixed rod, and that one end of the frame actuator is fitted at the upper part spaced apart from the mounting point of the fixed rod, and that its other end is mounted spaced apart from the axis of rotation of the roller, in order thereby to create a parallelogram connection holding the fastening arrangement and at a largely unchanged angle with the tool placed approximately in parallel with the ground.

Alternatively, the soil compacter may be constructed so that the vertical movement of the connected tool is caused by at least one telescoping rod which is mounted on the roller of the soil compacter and which connects the roller and the frame on which the connected tool is mounted on the rearmost part of the frame.

By using a soil compacter according to the invention, it will be possible and relatively easy for the farmer to change configuration of the combination machine so that the farmer may exchange the connected tool with regard to soil conditions and desired work routines. For example, it may be envisaged that in stiff clay soil it will be an advantage if the soil is worked an extra time with a harrow/roller before sowing. In other combinations it may be envisaged that the soil compacter may e.g. be combined with a sowing machine.

In the embodiment of the invention, the soil compacter will be very stable when driving with a coupled tool during soil treatment and during transport, where the connected tool is in a position lifted off the soil since the roller will be supporting over its entire width.

The invention is explained more closely in the following with reference to the drawings, where:
- Fig. 1: shows a perspective view of an embodiment of the soil compacter,
- Fig. 2: shows a perspective view of the soil compacter shown in Fig. 1,
- Fig. 3: shows a perspective view of the soil compacter shown in Fig. 1,
- Fig. 4: shows a perspective view of the soil compacter shown in Fig. 1,
- Fig. 5: shows a side view of the soil compacter and a harrow,
- Fig. 6: shows a side view of the soil compacter with a connected harrow,
- Fig. 7: shows a side view of the soil compacter with a connected harrow,
- Fig. 8: shows a side view of the soil compacter with a connected harrow,
- Fig. 9: shows a perspective view of a second embodiment of the soil compacter,
- Fig. 10: shows a side view of the soil compacter shown in Fig. 9,
- Fig. 11: shows a side view of the soil compacter shown in Fig. 9,
- Fig. 12: shows a side view of the soil compacter shown in Fig. 9,
- Fig. 13: shows a side view of the soil compacter with a connected harrow,
- Fig. 14: shows a side view of the soil compacter with a connected harrow,
- Fig. 15: shows a diagram of a third alternative embodiment of the soil compacter, and
- Fig. 16: shows a diagram of a fourth alternative embodiment of the soil compacter.

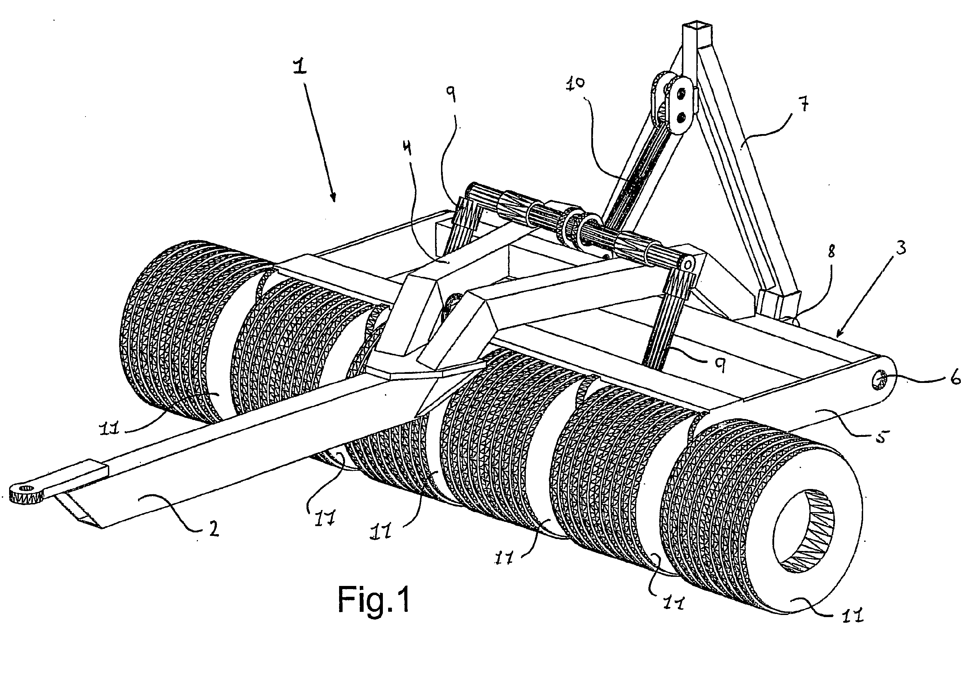

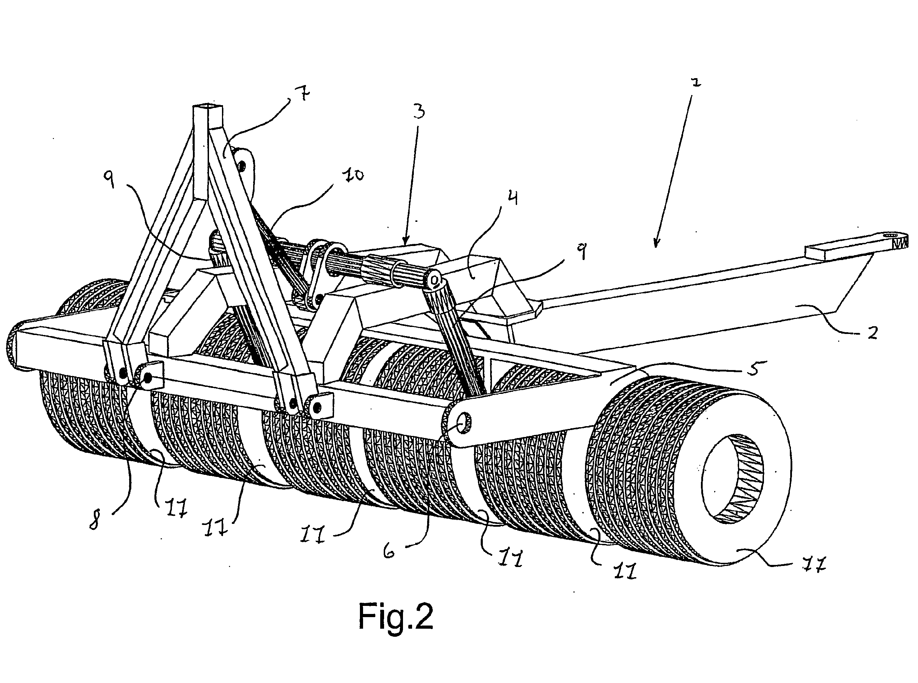

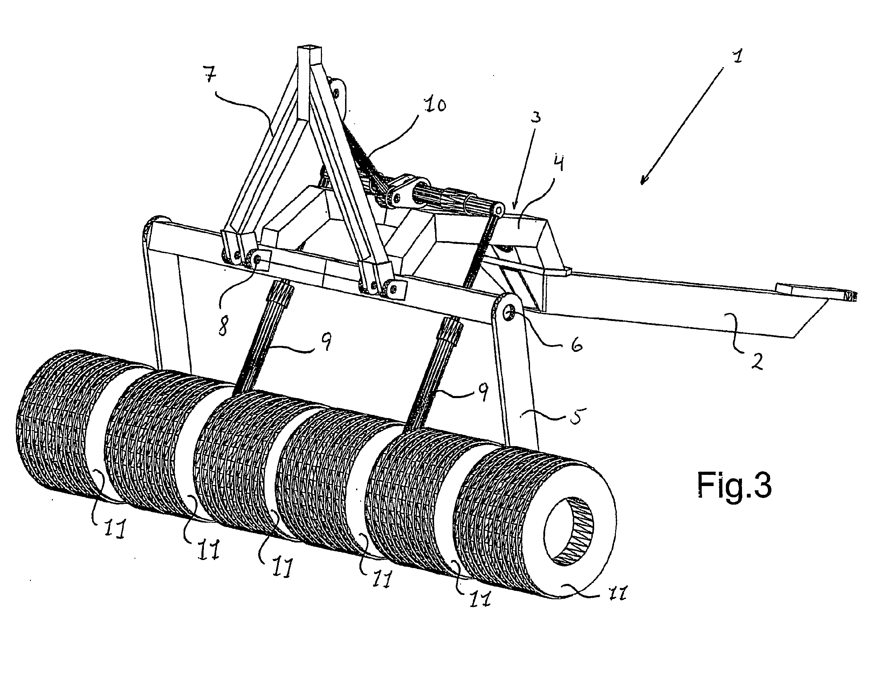

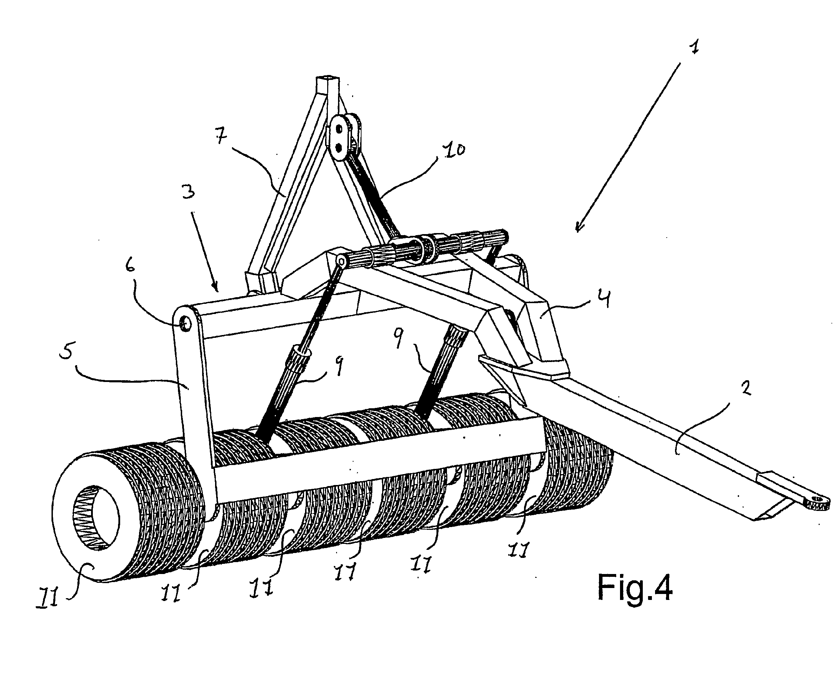

In the embodiment shown on Figs. 1 - 4 is seen a soil compacter 1 including a drawbar 2 for coupling to a tractor (not shown), a frame 3 consisting of an upper part 4 and a lower part 5 which are interconnected with a pivoting hinge 6, a fastening arrangement 7 connected to the upper part 4 of the frame 3 with a pivoting hinge 8, two frame actuators 9 connecting the lower part 5 of the frame 3 with the upper part 4 of the frame 3, a connecting actuator 10 connecting the fastening arrangement 7 with the upper part 4 of the frame 3, and six rollers 11.

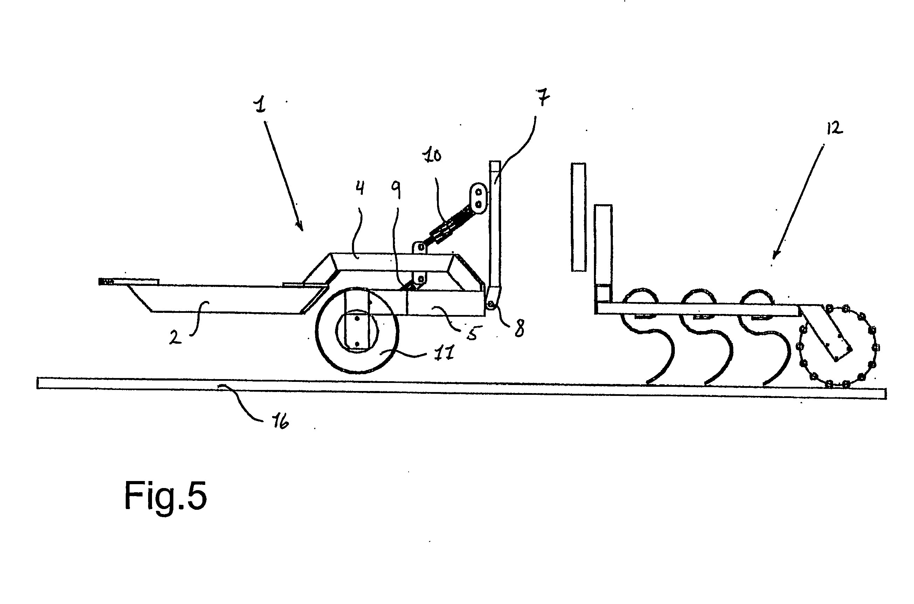

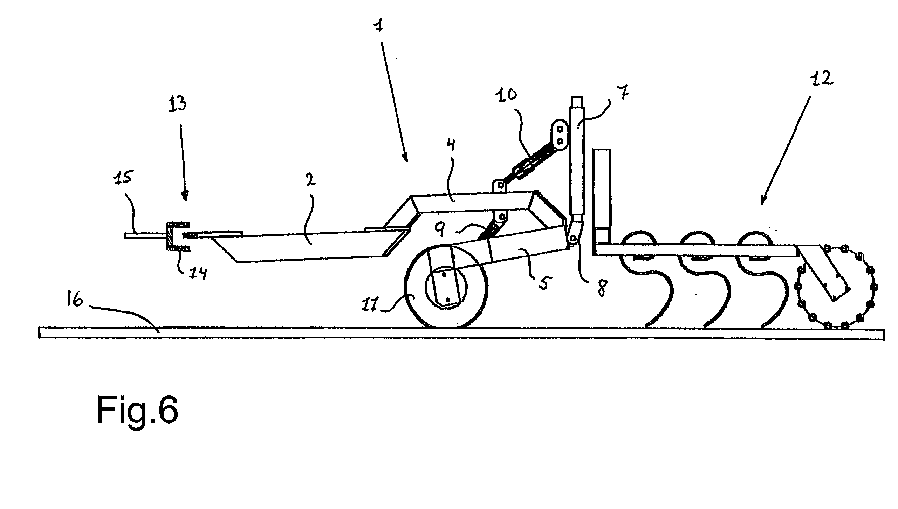

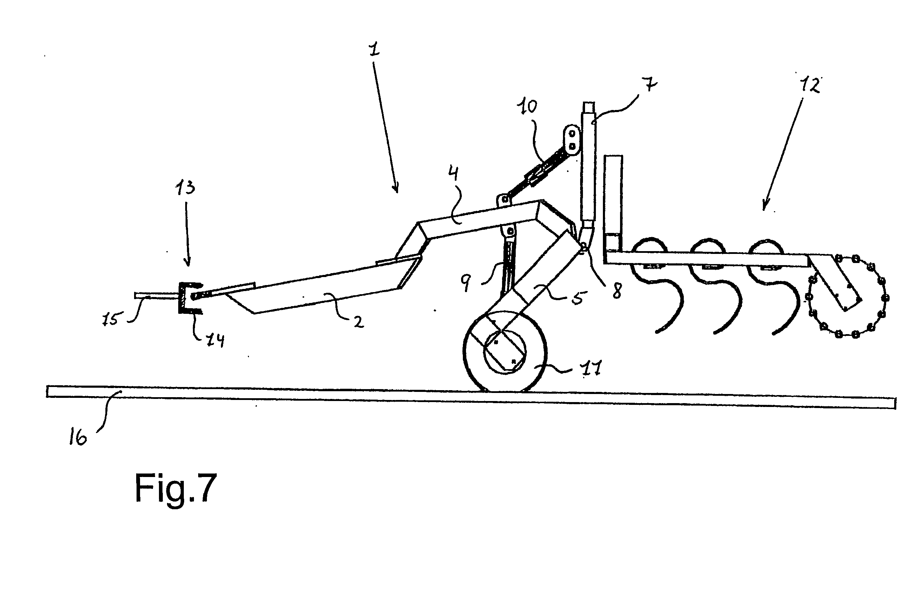

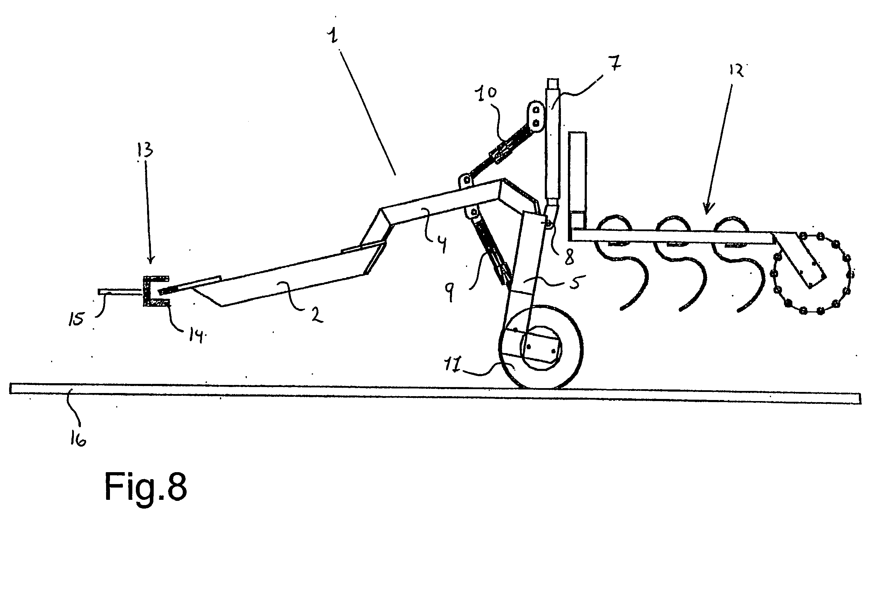

Figs. 5-8 show how a harrow 12 is connected to the soil compacter 1 and different vertical positions of the harrow 12, when actuation of the frame actuator 9 and the connecting actuator 10 is effected. It is to be noted that the fastening arrangement 7 has the same angle with the ground surface 16 so that the position of the harrow 12 is preferably parallel with the ground surface 16. In this embodiment of the invention, the soil compacter 1 is coupled to a tractor (not shown) via a forked connection 13, where the fork 14 is mounted on the drawbar 15 of the tractor.

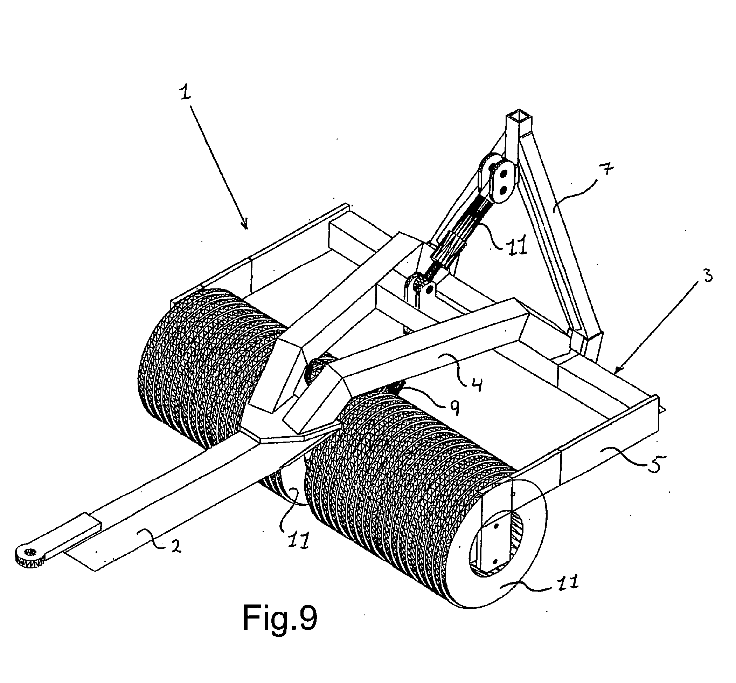

In the alternative embodiment shown on Fig. 9 is seen a soil compactor 1 including a drawbar 2 for connecting to a tractor, a frame 3 consisting of an upper part 4 and a lower part 5 which are interconnected with a pivoting hinge 6 (not shown), a fastening arrangement 7 connected with the upper part 4 of the frame 3 with a pivoting hinge 8 (not shown on the Figure), a frame actuator 9 connecting the lower part 5 of the frame 3 with the upper part 4 of the frame 3, a coupling actuator 10 connected fastening arrangement 7 with the upper part 4 of the frame 3 and two rollers 11.

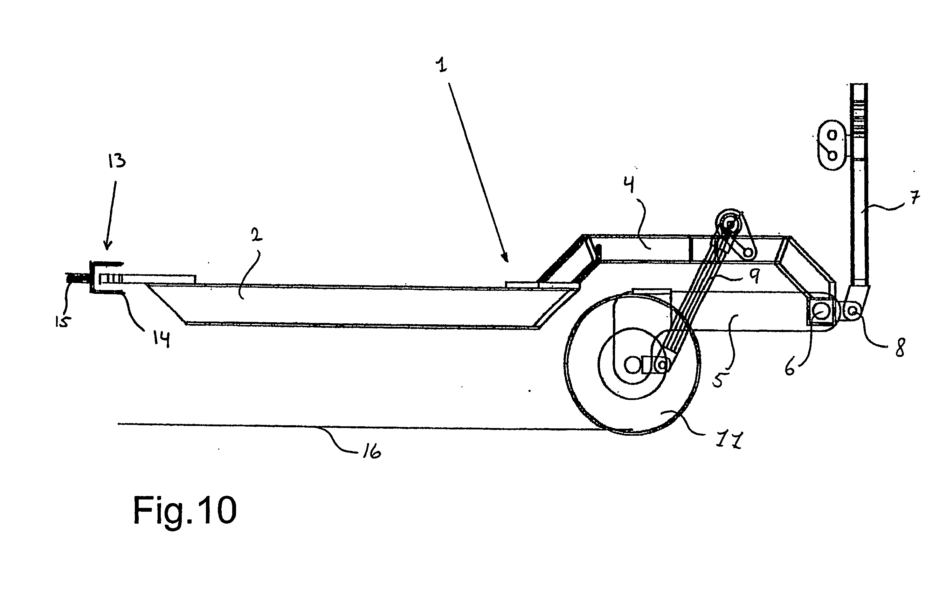

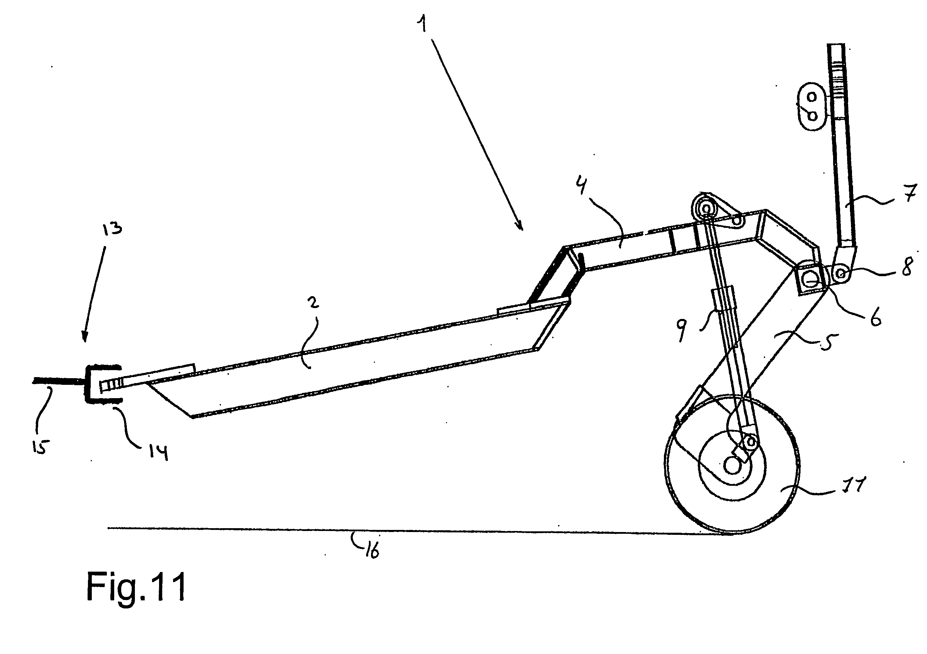

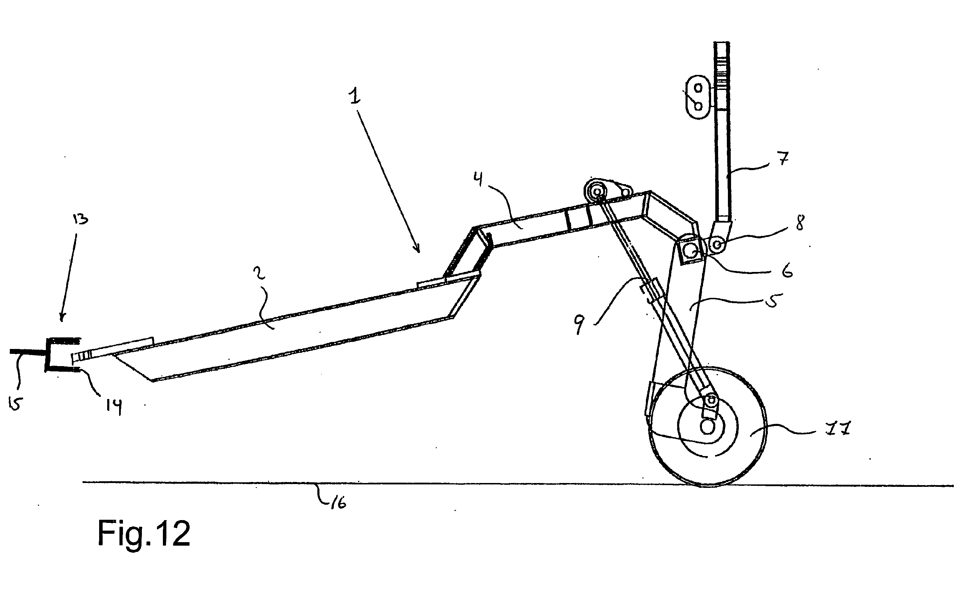

Figs. 10- 12 shows a side view of the soil compacter 1 in the alternative embodiment shown in Fig. 9 in three different positions: one position where the frame actuator 9 is not actuated, one where the frame actuator 9 is actuated and one where the frame actuator is fully actuated. The connection between the upper part 4 of the frame and the fastening arrangement 7 is not shown, but may e.g. be an actuator or a fixed rod. In this embodiment of the invention, the soil compacter 1 is connected to a tractor (not shown) via a forked coupling 13 where the fork 14 is mounted on the drawbar 15 of the tractor.

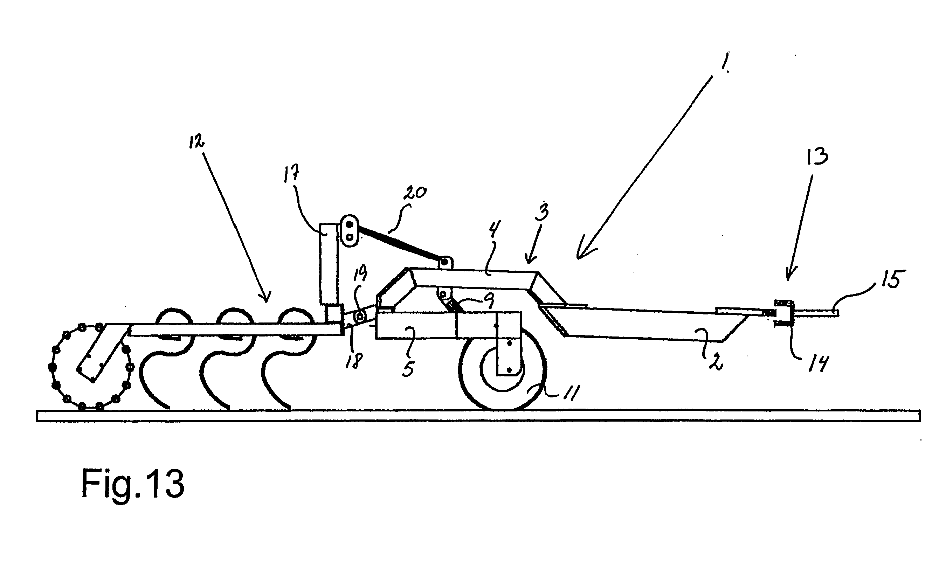

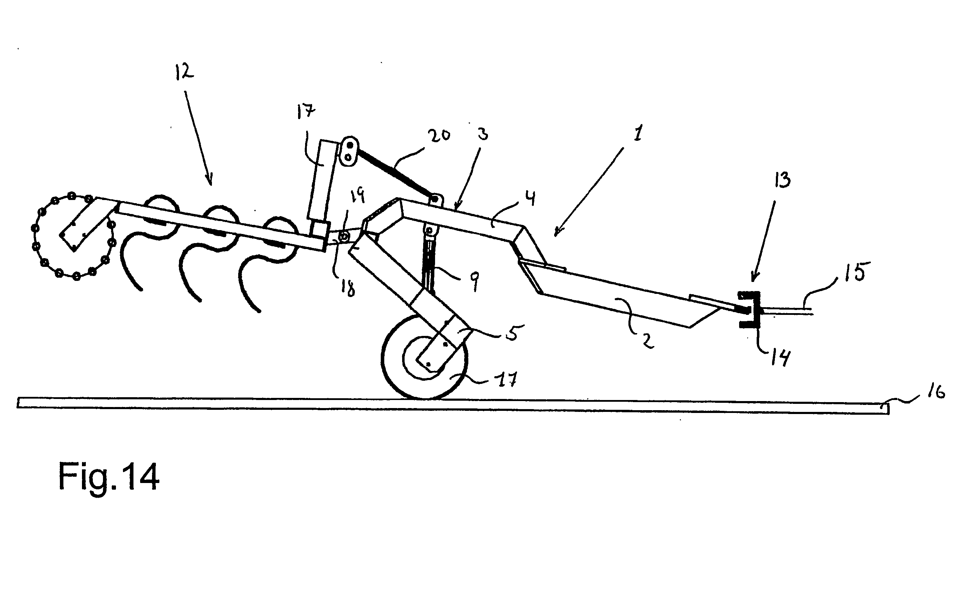

Figs. 13-14 show a side view of a soil compacter 1 connected to a harrow 12 in a three-point suspension 17, where the fasting arrangement 18 is connected to the soil compacter 1 via a hinge 19. A fixed top rod 20 connects the three-point suspension 17 on the harrow 12 and the upper part 4 of the frame 3 on the soil compacter 1. The soil compacter 1 is connected to a tractor (not shown) via a forked connection 13.

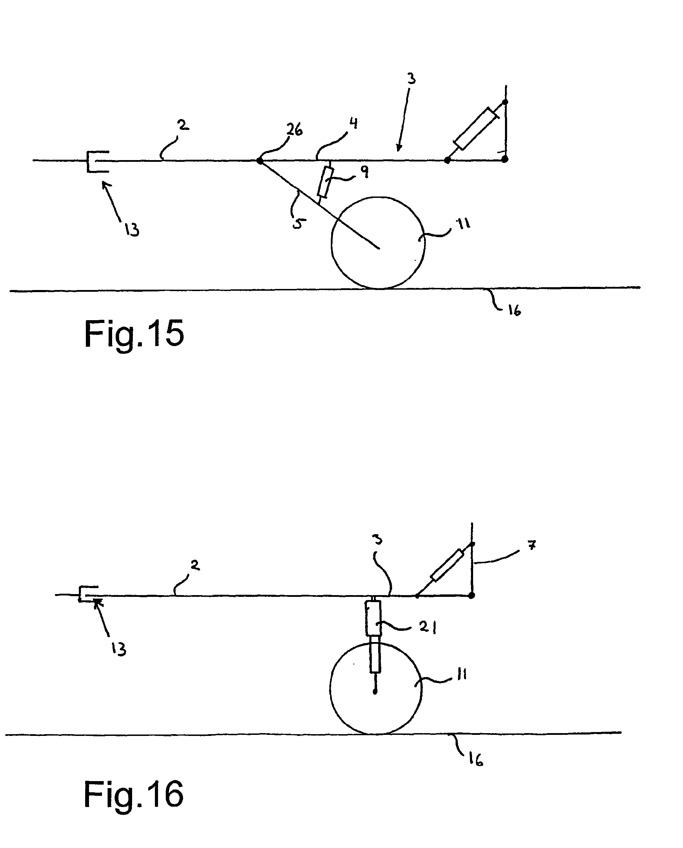

Fig. 15 shows an alternative embodiment of a soil compacter 1 where the upper part 4 and the lower part 5 of the frame 3 are hinged with a hinging arrangement 26 at a point having connection to the drawbar 2 and which is disposed in front of the roller 11 of the soil compacter 1. Between upper part 4 and lower part 5 of the frame 3, there is mounted a frame actuator 9. The soil compacter 1 is coupled to a tractor (not shown) via a forked connection 13.

In Fig. 16 is shown an alternative embodiment of a soil compacter 1, where the frame 3 and the roller 11 are connected with one or more telescoping rods 21 providing for a vertical movement of the frame 3 so that the height of a tool connected to the fastening arrangement 7 may be changed. The soil compacter 1 is connected to a tractor (not shown) via a forked connection 13.

The invention is not limited to the embodiment shown on the drawings and described above. Other embodiments with other kinds of fastening arrangements and number of actuators are conceivable within the scope of the present invention.

## Claims

1. A soil compacter (1) with at least one roller (11) suited for compacting soil, where the soil compacter (1) includes a drawbar (2) for fastening after a towing machine, preferably a tractor, a frame (3) for connecting the at least one roller (11) with the drawbar (2), a fastening arrangement (7) for connecting a tool (12) behind the at least one roller (11), where the at least one roller (11) functions as supporting roller for the connected tool (12), where the fastening of the drawbar (2) is effected via a forked connection (13), that the frame (3) extends rearwards of the roller (11), and that the tool (12) is connected by suspending at the rearmost part of the frame (3) so that a part of the weight of connected tool (12) and towing machine is transferred according to the principle of the lever to the at least one roller (11) in order to achieve an increased pressure from the at least one roller (11) and a uniform compacting of the soil (16), **characterised in that** the frame (3) is composed of at least two parts, where an upper part (4) of the frame (3) is connected with the drawbar (2), and a lower part (5) of the frame (3) is connected with the at least one roller (11), where the at least two parts are pivotably connected to a first hinge arrangement (6), preferably a pivot hinge, where between the upper part (4) and the lower part (5) of the frame (3) there is mounted at least one frame actuator (9) so that actuation of the at least one frame actuator (9) results in a change of the angle between the upper (4) and the lower part (5) of frame (3) and a change in height of the connected tool in relation to the ground (16).

2. A soil compacter (1) according to claim 1, **characterised in that** the fastening arrangement (7), preferably a three-point suspension, for mounting of a tool is mounted on the upper part (4) of the frame (3) with a second hinge arrangement (8), preferably a pivoting hinge, and that between the fastening arrangement (7) and the upper part of the frame (3) there is mounted at least one connecting actuator (10) for adjusting the angle between the tool connected and the upper part (4) of the frame (3) in order to keep the tool positioned preferably in parallel with the ground (16).

3. A soil compacter (1) according to any of claims 1-2, **characterised in that** the soil compacter (1) includes a control mechanism for controlling the at least one frame actuator (9) and the at least one connecting actuator (10), where the control mechanism is configured for adjusting the at least one connecting actuator (10) in relation to the at least one frame actuator (9) so that a change of the at least one frame actuator (9) results in adjustment of the at least one connecting actuator (10) for maintaining the preferably parallel position of the tool relative to the ground (16).

4. A soil compacter (1) according to any of claims 1 - 3, **characterised in that** the forked connection (13) is designed so that it includes at least one connection type from the group consisting of:
- the drawbar (2) of the soil compacter (1) being fitted with a fork which by connecting the soil compacter (1) to the towing machine encloses the drawbar (15) of the towing machine;
- the drawbar (15) of the towing machine being fitted with a fork (14) which by connecting the soil compacter to the towing machine encloses the drawbar (2) of the soil compacter; or
- both drawbars of the towing machine and the soil compacter (1) being fitted with a fork that engages when connecting.

5. A soil compacter (1) according to any of claims 1-4, **characterised in that** the at least one roller (11) is of a material including at least one from the group consisting of rubber tyres, metal rings, or very hard plastic.

6. A soil compacter (1) according to any of claims 1-5, **characterised in that** the actuators (9, 10) includes at least one from the group consisting of hydraulic cylinders, pneumatic cylinders or screw rods.

7. A soil compacter (1) according to any of claims 1, 4 - 6, **characterised in that** fastening arrangement (7), preferably a three-point suspension, for mounting a tool is mounted on the upper part (4) of the frame (3) with a second hinge arrangement (8), preferably a pivoting hinge, that between the fastening arrangement (7) and the upper part (4) of the frame (3) there is fitted a fixed rod (20), and that one end of the frame actuator (9) is mounted on the upper part (4) spaced apart from the mounting point of the fixed rod (20), and that the other end of it is mounted spaced apart from the axis of rotation of the roller (1) in order thereby to create a parallelogram connection holding the fastening arrangement (7) at a largely unchanged angle with the tool which is disposed approximately in parallel with the ground (16).

## Patentansprüche

1. Erdreichverdichter (1) mit wenigstens einer Walze (11), die dazu geeignet ist, Erdreich zu verdichten, wobei der Erdreichverdichter (1) eine Zugstange (2) für die Befestigung hinter einer Schleppmaschine, vorzugsweise hinter einem Traktor, einen Rahmen (3) zum Verbinden der wenigstens einen Walze (11) mit der Zugstange (2) und eine Befestigungsanordnung (7) zum Verbinden eines Werkzeugs (12) hinter der wenigstens einen Walze (11) umfasst, wobei die wenigstens eine Walze (11) als Unterstützungswalze für das verbundene Werkzeug (12) dient, wobei die Befestigung der Zugstange (2) über eine Gabelverbindung (13) erfolgt, wobei sich der Rahmen (3) hinter der Walze (11) nach hinten erstreckt und wobei das Werkzeug (12) durch Aufhängen an dem hintersten Teil des Rahmens (3) verbunden ist, so dass ein Teil des Gewichts des verbundenen Werkzeugs (12) und der Schleppmaschine gemäß dem Hebelprinzip an die wenigstens eine Walze (11) übertragen wird, um einen erhöhten Druck von der wenigstens einen Walze (11) und eine gleichmäßige Verdichtung des Erdreichs (16) zu erzielen, **dadurch gekennzeichnet, dass** der Rahmen (3) aus wenigstens zwei Teilen aufgebaut ist, wobei ein oberer Teil (4) des Rahmens (3) mit der Zugstange (2) verbunden ist und ein unterer Teil (5) des Rahmens (3) mit der wenigstens einen Walze (11) verbunden ist, wobei die wenigstens zwei Teile an einer ersten Scharnieranordnung (6), vorzugsweise einem Drehscharnier, schwenkbar verbunden sind, wobei zwischen dem oberen Teil (4) und dem unteren Teil (5) des Rahmens (3) wenigstens ein Rahmenaktuator (9) angebracht ist, so dass die Betätigung des wenigstens einen Rahmenaktuators (9) eine Änderung des Winkels zwischen dem oberen Teil (4) und dem unteren Teil (5) des Rahmens (3) und eine Änderung der Höhe des verbundenen Werkzeugs in Bezug auf den Boden (16) zur Folge hat.

2. Erdreichverdichter (1) nach Anspruch 1, **dadurch gekennzeichnet, dass** die Befestigungsanordnung (7), vorzugsweise eine Dreipunktaufhängung, für die Anbringung eines Werkzeugs am oberen Teil (4) des Rahmens (3) mittels einer zweiten Scharnieranordnung (8), vorzugsweise eines Drehscharniers, angebracht ist und dass zwischen der Befestigungsanordnung (7) und dem oberen Teil des Rahmens (3) wenigstens ein Verbindungsaktuator (10) angebracht ist, um den Winkel zwischen dem verbundenen Werkzeug und dem oberen Teil (4) des Rahmens (3) einzustellen, um das Werkzeug vorzugsweise parallel zum Boden (16) positioniert zu halten.

3. Erdreichverdichter (1) nach einem der Ansprüche 1-2, **dadurch gekennzeichnet, dass** der Erdreichverdichter (1) einen Steuermechanismus umfasst, um den wenigstens einen Rahmenaktuator (9) und den wenigstens einen Verbindungsaktuator (10) zu steuern, wobei der Steuermechanismus so konfiguriert ist, dass der wenigstens eine Verbindungsaktuator (10) in Bezug auf den wenigstens einen Rahmenaktuator (9) eingestellt wird, so dass eine Änderung des wenigstens einen Rahmenaktuators (9) eine Einstellung des wenigstens einen Verbindungsaktuators (10) zur Folge hat, um die vorzugsweise parallele Position des Werkzeugs in Bezug auf den Boden (16) aufrechtzuerhalten.

4. Erdreichverdichter (1) nach einem der Ansprüche 1-3, **dadurch gekennzeichnet, dass** die Kabelverbindung (13) so entworfen ist, dass sie wenigstens einen Verbindungstyp aus der Gruppe umfasst, die aus den folgenden Konfigurationen besteht:
- die Zugstange (2) des Erdreichverbinders (1) ist an einer Gabel angebracht, die durch Verbinden des Erdreichverdichters (1) mit der Schleppmaschine die Zugstange (15) der Schleppmaschine umgibt;
- die Zugstange (15) der Schleppmaschine ist an einer Gabel (14) angebracht, die durch Verbinden des Erdreichverdichters mit der Schleppmaschine die Zugstange (2) des Erdreichverdichters umgibt; oder
- beide Zugstangen der Schleppmaschine bzw. des Erdreichverdichters (1) sind an einer Gabel angebracht, die in Eingriff gelangt, wenn eine Verbindung hergestellt ist.

5. Erdreichverdichter (1) nach einem der Ansprüche 1-4, **dadurch gekennzeichnet, dass** die wenigstens eine Walze (11) aus einem Material besteht, das wenigstens eines aus der Gruppe enthält, die aus Gummireifen, Metallringen und sehr hartem Kunststoff besteht.

6. Erdreichverdichter (1) nach einem der Ansprüche 1-5, **dadurch gekennzeichnet, dass** die Aktuatoren (9, 10) wenigstens einen aus der Gruppe enthalten, die aus Hydraulikzylindern, Druckluftzylindern und Gewindestangen besteht.

7. Erdreichverdichter (1) nach einem der Ansprüche 1, 4-6, **dadurch gekennzeichnet, dass** die Befestigungsanordnung (7), vorzugsweise eine Dreipunktaufhängung, für die Anbringung eines Werkzeugs am oberen Teil (4) des Rahmens (3) mittels einer zweiten Scharnieranordnung (8), vorzugsweise eines Drehscharniers, angebracht ist, dass zwischen der Befestigungsanordnung (7) und dem oberen Teil (4) des Rahmens (3) eine befestigte Stange angebracht ist und dass ein Ende des Rahmenaktuators (9) am oberen Teil (4) in einem Abstand vom Anbringungspunkt der befestigten Stange (20) angebracht ist und dass das andere Ende hiervon in einem Abstand von der Drehachse der Walze (1) angebracht ist, um **dadurch** eine Parallelogrammverbindung zu erzeugen, die die Befestigungsanordnung (7) unter einem im Wesentlichen unveränderten Winkel zu dem Werkzeug, das angenähert parallel zum Boden (16) angeordnet ist, hält.

## Revendications

1. Compacteur (1) avec au moins un cylindre (11) adapté pour compacter le sol, le compacteur (1) comprenant une barre de traction (2) pour la fixation après une machine de remorquage, de préférence un tracteur, un châssis (3) pour raccorder le au moins un cylindre (11) à la barre de traction (2), un agencement de fixation (7) pour raccorder un outil (12) derrière le au moins un cylindre (11), le au moins un cylindre (11) fonctionnant comme cylindre de support pour l'outil raccordé (12), la fixation de la barre de traction (2) étant effectuée par l'intermédiaire d'un raccord à fourche (13), le châssis (3) s'étendant vers l'arrière du cylindre (11), et l'outil (12) étant raccordé en étant suspendu au niveau de la partie la plus arrière du châssis (3) de sorte qu'une partie du poids de l'outil raccordé (12) et de la machine de remorquage est transférée selon le principe de levier au au moins un cylindre (11) afin d'obtenir une pression accrue à partir du au moins un cylindre (11) et un compactage uniforme du sol (16), **caractérisé en ce que** le châssis (3) est composé d'au moins deux parties, une partie supérieure (4) du châssis (3) étant raccordée à la barre de traction (2), et une partie inférieure (5) du châssis (3) étant raccordée au au moins un cylindre (11), les au moins deux parties étant raccordées de manière pivotante à un premier agencement formant charnière (6), de préférence une charnière à pivot, au moins un actionneur de châssis (9) étant monté entre la partie supérieure (4) et la partie inférieure (5) du châssis (3) de sorte que l'actionnement du au moins un actionneur de châssis (9) entraîne une modification de l'angle entre la partie supérieure (4) et la partie inférieure (5) du châssis (3) et une modification de la hauteur de l'outil raccordé par rapport au sol (16).

2. Compacteur (1) selon la revendication 1, **caractérisé en ce que** l'agencement de fixation (7), de préférence une suspension à trois points, destiné à fixer un outil est monté sur la partie supérieure (4) du châssis (3) avec un second agencement formant charnière (8), de préférence une charnière pivotante, et **en ce qu'**entre l'agencement de fixation (7) et la partie supérieure du châssis (3) il est monté au moins un actionneur de raccordement (10) destiné à régler l'angle entre l'outil raccordé et la partie supérieure (4) du châssis (3) afin de garder l'outil positionné de préférence en parallèle par rapport au sol (16).

3. Compacteur (1) selon l'une quelconque des revendications 1 à 2, **caractérisé en ce que** le compacteur (1) comprend un mécanisme de commande destiné à commander le au moins un actionneur de châssis (9) et le au moins un actionneur de raccordement (10), le mécanisme de commande étant configuré pour régler le au moins un actionneur de raccordement (10) par rapport au au moins un actionneur de châssis (9) de sorte qu'une modification du au moins un actionneur de châssis (9) entraîne le réglage du au moins un actionneur de raccordement (10) pour maintenir la position de préférence parallèle de l'outil par rapport au sol (16).

4. Compacteur (1) selon l'une quelconque des revendications 1 à 3, **caractérisé en ce que** le raccord à fourche (13) est conçu de sorte qu'il comprend au moins un type de raccord dans le groupe constitué de :
- la barre de traction (2) du compacteur (1) étant équipée d'une fourche qui, en raccordant le compacteur (1) à la machine de remorquage, enferme la barre de traction (15) de la machine de remorquage ;
- la barre de traction (15) de la machine de traction étant équipée d'une fourche (14) qui, en raccordant le compacteur à la machine de remorquage, enferme la barre de traction (2) du compacteur ; ou
- les deux barres de traction de la machine de remorquage et du compacteur (1) étant équipées d'une fourche qui se met en prise lors du raccordement.

5. Compacteur (1) selon l'une quelconque des revendications 1 à 4, **caractérisé en ce que** le au moins un cylindre (11) est réalisé dans un matériau comprenant au moins un matériau du groupe constitué de bandages en caoutchouc, anneaux métalliques, ou plastique très dur.

6. Compacteur (1) selon l'une quelconque des revendications 1 à 5, **caractérisé en ce que** les actionneurs (9, 10) comprennent au moins un du groupe constitué de vérins hydrauliques, vérins pneumatiques ou tiges filetées.

7. Compacteur (1) selon l'une quelconque des revendications 1, 4 à 6, **caractérisé en ce que** l'agencement de fixation (7), de préférence une suspension à trois points, destiné à fixer un outil est monté sur la partie supérieure (4) du châssis (3) avec un second agencement formant charnière (8), de préférence une charnière pivotante, **en ce qu'**une tige fixe (20) est disposée entre l'agencement de fixation (7) et la partie supérieure (4) du châssis (3), et **en ce qu'**une extrémité de l'actionneur de châssis (9) est montée sur la partie supérieure (4) disposée à distance du point de fixation de la tige fixe (20), et **en ce que** l'autre extrémité de celui-ci est fixée à distance de l'axe de rotation du cylindre (1) afin de créer ainsi un raccord en parallélogramme maintenant l'agencement de fixation (7) à un angle sensiblement inchangé avec l'outil qui est disposé approximativement en parallèle par rapport au sol (16).
